# FASCICULE DE BREVET EUROPEEN

(11) **EP 3 857 473 B1**
(45) Date de publication et mention de la délivrance du brevet: **15.05.2024**
(21) Numéro de dépôt: 19765288.6
(22) Date de dépôt: 30.07.2019
(51) Int. Cl.: G06Q 10/0631, G06Q 10/04, G06Q 10/047, G06Q 10/0639, G06Q 50/30

(54) **PROCÉDÉ DE RÉGULATION D'UN RÉSEAU DE TRANSPORT MULTIMODAL**
VERFAHREN ZUR REGELUNG EINES MULTIMODALEN TRANSPORTNETZES
METHOD FOR REGULATING A MULTI-MODAL TRANSPORT NETWORK

(30) Priorité: 26.09.2018 FR 1858783
(43) Date de publication de la demande: 04.08.2021
(73) Titulaire: Cosmo Tech, 69007 Lyon (FR)
(72) Inventeur: ZHA, Yunfei, Shanghai 200031 (CN); ALLALI, Oussama, 91120 PALAISEAU (FR); LACROIX, Thomas, 69006 LYON (FR)
(74) Mandataire: Germain Maureau
(86) Numéro de dépôt international: PCT/FR2019/051872
(87) Numéro de publication internationale: WO 2020/065148

(56) Documents cités:
- CN-A- 104 200 286
- CN-A- 105 389 640
- CN-A- 107 194 491
- US-A1- 2017 109 764
- US-A1- 2017 206 201

## Description

La présente invention est destinée aux experts de la régulation des transports en commun. Son but est que les opérateurs de transport puissent prédire le trafic des flux de différents modes de transport (bus, métro, train, tramway, etc.) en prenant en compte en temps réel les congestions et les incidents sur l'intégralité de leur réseau ainsi que les réseaux adjacents (réseau routier) afin d'influencer les choix d'itinéraires des passagers et de réguler l'offre de services pour un meilleur trafic.

Aujourd'hui, les opérateurs de transports utilisent des solutions de régulation monomodales (qui ont attrait à un seul mode de transport voire une seule ligne), comme c'est le cas avec les systèmes d'aide à l'exploitation (SAE) pour les bus et les tramways ou bien encore les Automatic Train Supervision (ATS) pour les trains. Ces systèmes sont développés par les mêmes industriels qui déploient les infrastructures de ces modes de transport ou par des éditeurs de logiciels indépendants. Mais la vision passager (probabilité d'arrivée à l'heure et confort) n'est pas prise en compte dans ce type d'outils.

Dans les métropoles dont le réseau urbain est dense et divers, des systèmes multimodaux ont été mis en place. L'usager du réseau de transports en commun peut trouver l'itinéraire qui lui correspond le mieux selon une recherche multicritère. Cependant, l'information ne lui est pas donnée en temps réel et selon les difficultés de trafic qui pourraient apparaître pendant son trajet. Les solutions aujourd'hui sur le marché ne permettent pas de prédire la probabilité d'arriver à l'heure à l'usager. Cette possibilité existe sur l'usage routier avec des plateformes en ligne proposant des applications grand public qui permettent à l'usager et selon son véhicule de faire le meilleur choix d'itinéraire en fonction du trafic en temps réel.

La difficulté actuelle réside dans la modélisation du système multimodal dans son ensemble. Un système multimodal comprend des infrastructures physiques, des interconnexions, un parc roulant, des règles d'horaire, une supervision opérationnelle, et des passagers. Chacun de ces éléments a des contraintes et des comportements spécifiques et il est très complexe de considérer l'ensemble. Il faut par exemple prendre en compte le comportement des différents types de passagers en fonction des divers incidents et perturbations qui peuvent surgir tout en les informant rapidement des nouvelles possibilités de reroutage. Ceci afin d'éviter une trop grande congestion et une insatisfaction des clients due à des retards qui s'avèrent d'autant plus problématiques quand ceux-là impliquent la perte d'une correspondance. Et il faut aussi appliquer les politiques de mobilité des autorités dont le réseau dépend.

L'optimisation des itinéraires multimodaux doit donc se baser non seulement sur l'interconnexion des différentes lignes et modes de transports mais aussi sur le calcul d'incertitude du temps de parcours tout en prenant en compte l'ensemble des contraintes du système. Le but est aussi de réduire les temps de calcul pour permettre aux opérateurs de mettre en place des solutions (rajouter des bus sur les lignes x et y pour décongestionner telle ligne de métro bloquée par un incident...) et ce dans les plus brefs délais.

Le document US 2017/109 764 A1 décrit un procédé se rapportant à un réseau de transport ; le procédé divulgué par ce document ne permet toutefois pas de réguler la mise en oeuvre du réseau de transport sur la base d'un indicateur de performance.

Les documents CN 105 389 640 A et CN 104 200 286 A décrivent également des procédés de prédiction et/ou d'optimisation du trafic dans un réseau de transport ; ces procédés ne permettent pas une régulation de la mise en oeuvre du réseau de transport sur la base d'un indicateur de performance.

L'invention a donc pour but de proposer une solution à tout ou partie de ces problèmes.

A cet effet, la présente invention concerne un procédé de régulation d'un réseau de transport, le réseau de transport étant utilisé par une pluralité de passagers du réseau et le réseau de transport comprenant au moins un mode de transport, chaque mode de transport de l'au moins un mode de transport comprenant au moins un véhicule et une pluralité de stations, une station origine de la pluralité de stations de l'au moins un mode de transport étant reliée par une pluralité d'itinéraires, chaque itinéraire de la pluralité d'itinéraires comprenant une liste de stations intermédiaires de la pluralité de stations, à une station destination de la pluralité de stations, chaque itinéraire comprenant en outre un ou plusieurs tronçons adaptés au mouvement de l'au moins un véhicule entre deux stations de la pluralité de stations, une table horaire de l'au moins un mode de transport définissant une heure de passage de l'au moins un véhicule à la station origine, à la station destination, et à chaque station de la liste de stations intermédiaires de l'itinéraire, la pluralité de passagers du réseau comprenant, pour chaque station de la pluralité de stations de l'au moins un mode de transport, un nombre de passagers en attente à la station, le nombre de passagers en attente à la station étant déterminé à partir de données captées par au moins un instrument de collecte de données, une matrice origine destination définissant, pour une période de temps, et pour un binôme formé par la station origine et la station destination, un nombre additionnel de passagers qui entreront sur le réseau par la station origine, pendant la période de temps, pour rejoindre la station destination, un débit définissant un débit d'entrée ou de sortie des passagers de l'au moins un véhicule pendant un arrêt de l'au moins un véhicule à une station de la pluralité de stations,
le procédé comprenant les étapes suivantes :
pour chaque mode de transport de l'au moins un mode de transport,
   - détermination d'un état courant du mode de transport défini pour un temps courant à l'intérieur de la période de temps ;
   - simulation d'un état futur, pour un temps futur, du mode de transport sur la base de l'état courant, et du nombre additionnel de passagers qui entreront sur le réseau pendant la période de temps selon la matrice origine destination ;
   - évaluation d'au moins un indicateur de performance sur la base de l'état futur du mode de transport ;
   - détermination d'au moins une action régulatrice sur l'au moins un mode de transport en fonction de l'évaluation de l'au moins un indicateur ;
   - nouvelle simulation d'un nouvel état futur, pour le temps futur, sur la base de l'état courant, pour le temps courant, et du nombre additionnel de passagers qui entreront sur le réseau pendant la période de temps selon la matrice origine destination ;
   - nouvelle évaluation de l'au moins un indicateur de performance du mode de transport sur la base du nouvel état futur ;
   - comparaison du résultat de la nouvelle évaluation et de l'évaluation de l'au moins un indicateur de performance ;
   - répétition des étapes de détermination d'au moins une action régulatrice, de nouvelle simulation, de nouvelle évaluation et de comparaison jusqu'à ce qu'un résultat de la comparaison indique une amélioration de l'au moins un indicateur de performance,
   - mise en oeuvre de ladite au moins une action déterminée à la dernière occurrence de l'étape de détermination de manière à améliorer la performance du réseau,
la simulation de l'état futur et la nouvelle simulation du nouvel état futur étant respectivement réalisées, pour au moins un temps intermédiaire entre le temps courant et le temps futur, en répartissant sur la pluralité d'itinéraires joignant la station origine et la station destination, selon une procédure de répartition prédéterminée, le nombre de passagers en attente à ladite station origine additionné au nombre additionnel estimé pour rejoindre ladite station destination, pour ladite station origine et pour une période de temps incluant l'au moins un temps intermédiaire, sur la base de la matrice origine destination
dans lequel l'état courant du mode de transport est défini par au moins un paramètre, l'au moins un paramètre comprenant l'un parmi :
   - le nombre de passagers en attente aux stations de la pluralité de stations du mode de transport,
   - une position et une charge de l'au moins un véhicule du mode de transport,
   - une répartition par profil-passager, du nombre de passagers en attente aux stations de la pluralité de stations du mode de transport,
et dans lequel une valeur est déterminée par l'au moins un instrument de collecte de données, pour chaque paramètre de l'au moins un paramètre, à l'étape de détermination ;
l'au moins une action régulatrice du mode de transport comprenant au moins l'une des actions parmi :
   ∘ ajouter un véhicule,
   ∘ modifier un itinéraire d'un véhicule pour aller d'une station de la pluralité de stations à une autre station de la pluralité de stations du mode de transport,
   ∘ modifier une heure de passage de l'au moins un véhicule à une station de la pluralité de stations,
   ∘ fermer une station pendant un certain temps,
   ∘ mettre en place un bus de substitution,
   ∘ fermer au moins l'un des un ou plusieurs tronçons pendant un certain temps,
   ∘ réduire le débit,
   ∘ ajouter une station, et
supprimer un arrêt à une station.

Selon ces dispositions, l'opérateur global du réseau de transport multimodal peut déterminer la ou les action(s) régulatrice(s) appropriée(s) pour améliorer au moins un indicateur de performance du réseau, compte tenu de l'effet prévisionnel de la ou des action(s) régulatrice(s).

Si les actions régulatrices s'avèrent avoir un effet prévisionnel satisfaisant sur le ou le(s) indicateur(s) de performance(s) alors ces actions pourront être mises en oeuvre par l'opérateur du réseau multimodal, de manière à améliorer effectivement la performance du réseau conformément aux indicateurs déterminés.

Ainsi selon ces dispositions, le procédé permet d'aider l'opérateur du réseau multimodal à mieux planifier son offre de mobilité multimodale pour mieux répondre à l'évolution dynamique des flux de mobilité, permettant ainsi d'améliorer la ponctualité globale du service, en considérant le point de vue du passager (heure d'arrivée plutôt que heure de départ/arrivée du véhicule de transport), en permettant à l'opérateur de tester l'impact de scénarios de régulation sur le système de mobilité.

Selon un mode de mise en oeuvre, l'invention comprend une ou plusieurs des caractéristiques suivantes, seules ou en combinaison.

Selon un mode de mise en oeuvre, la procédure de répartition prédéterminée est réalisée sur la base d'un profil-passager associé à chaque passager de la pluralité de passagers en attente à ladite station origine, et en fonction d'un état intermédiaire du réseau défini au temps intermédiaire.

Selon un mode de mise en oeuvre, le profil-passager associé à chaque passager de la pluralité de passagers est défini par des préférences de déplacement.

Selon un mode de mise en oeuvre, les profil-passagers et les destinationpassagers des passagers en attente sont prédéterminés pour chaque mode de transport, sur la base d'un historique de données statistiques construit à partir de simulations de plusieurs journées types pour chacune des stations de ce mode de transport et à différents moments de la journée.

Selon un mode de mise en oeuvre, un itinéraire-passager est associé à chaque passager de la pluralité de passagers en attente à ladite station origine, l'itinéraire-passager étant déterminé en fonction du profil-passager.

Selon un mode de mise en oeuvre, la procédure de répartition prédéterminée est une procédure d'affection dynamique multimodale.

Selon un mode de mise en oeuvre, l'au moins un instrument de collecte de données est un capteur, ou une application d'apprentissage de données statistiques, ou une application de télé-billetique d'achat de billets à distance.

Selon un mode de mise en oeuvre, pour chaque binôme formé par une station origine et une station destination, une répartition optimale de la pluralité de passagers en attente à la station origine, y compris le nombre additionnel estimé pour ladite station origine sur la base de la matrice origine destination, sur les différents itinéraires joignant la station origine à la station destination, est déterminée selon une procédure d'affectation dynamique multimodale, de sorte qu'un temps de parcours soit optimum pour la pluralité de passagers en attente à ladite station d'origine, le temps de parcours étant estimé sur la base de la pluralité d'itinéraires joignant la station origine et la station destination.

Selon un mode de mise en oeuvre un temps parcours est optimum s'il est minimum. Selon un mode de mise en oeuvre l'optimisation de la détermination des itinéraires vise une arrivée à destination au plus tôt pour les passagers, pour chacune des destinations et pour des profil-passagers prédéterminés statistiquement comme indiqué précédemment.

Selon un mode de mise en oeuvre, l'état courant du mode de transport est défini par au moins un paramètre, l'au moins un paramètre comprenant l'un parmi :
- un nombre de passagers en attente aux stations de la pluralité de stations du mode de transport,
- une position et une charge de l'au moins un véhicule du mode de transport, et
- une répartition, par profil-passager, du nombre de passagers en attente aux stations de la pluralité de stations du mode de transport,
et une valeur est déterminée par l'au moins un instrument de collecte de données, ou estimée, pour chaque paramètre de l'au moins un paramètre, à l'étape de détermination.

Selon un mode de mise en oeuvre, l'itinéraire-passager comprend une liste de stations, chaque station de ladite liste étant une station de la pluralité de stations de l'au moins un mode de transport, et chaque station de ladite liste étant déterminée en fonction de l'heure de passage de l'au moins un véhicule de chaque mode de transport de l'au moins un mode de transport aux stations de la pluralité de stations de chaque mode de transport de l'au moins un mode de transport, et de manière à optimiser l'heure de passage à la destination-passager, et en fonction du profil-passager.

Selon un mode de mise en oeuvre, le procédé est mis en oeuvre régulièrement, par exemple toutes les 5 minutes, et le temps futur de l'état futur simulé et le temps courant de l'état courant sont décalés dans le temps, par exemple d'une heure. Ainsi toutes les 5 minutes, est engagée une étape de détermination d'un état courant de chaque mode de transport du réseau, puis un état futur est simulé pour un temps futur décalé dans le temps, d'une heure par exemple, par rapport au temps courant de l'état courant; ainsi l'état futur simulé du réseau sera l'état prévisionnel une heure après la collecte des informations terrains et l'estimation des informations relatives à l'état courant, et le nouvel état futur simulé correspondra également à un état prévisionnel du réseau une heure après la collecte des informations terrains et l'estimation des informations relatives à l'état courant, compte tenu des actions régulatrices déterminées par le procédé.

Selon ses dispositions, le procédé est basé sur une simulation (respectivement une nouvelle simulation) fine et détaillée d'un état futur (respectivement d'un nouvel état futur), par pas de temps intermédiaires qui peuvent être très courts, typiquement environ une seconde, par exemple.

Les données terrains qui servent de base à l'élaboration de l'état courant puis à la simulation (respectivement à la nouvelle simulation) sont des informations temps-réel, collectées sur le terrain par l'instrument de collecte de données très peu de temps avant le début des étapes de simulation et de nouvelle simulation, donc à jour des évolutions de l'état du réseau les plus récentes.

Selon un mode de mise en oeuvre, l'au moins un mode de transport comprend au moins l'un des modes de transport parmi le mode de transport : par voie routière, par voie ferrée, par voie aérienne, par voie fluviale, par voie maritime.

Selon un mode de mise en oeuvre, les modes de transport par voie routière, aérienne, et fluviale comprennent respectivement au moins l'un des modes de transport parmi : le mode de transport privé et le mode de transport en commun.

Selon un mode de mise en oeuvre, l'au moins un indicateur de performance du réseau de transport comprend au moins l'un des indicateurs de: ponctualité, régularité, taux d'occupation, temps d'attente, durée de trajet.

Selon un mode de mise en oeuvre, l'indicateur de ponctualité permet à l'opérateur du réseau d'évaluer, pendant la période de simulation, l'avance ou le retard des véhicules par rapport au heures de passage prévues par l'opérateur.

Selon un mode de mise en oeuvre, l'indicateur de régularité permet à l'opérateur du réseau d'évaluer, pendant la période de simulation, l'écart estimé entre les véhicules qui circulent le long d'un même itinéraire et de comparer cet écart à un écart nominal.

Selon un mode de mise en oeuvre l'indicateur de taux d'occupation permet à l'opérateur du réseau d'évaluer, pendant la période de simulation, le confort des passagers en comparant ce taux d'occupation ou cette charge estimé à un taux d'occupation ou charge nominal.

Selon un mode de mise en oeuvre, l'indicateur de temps d'attente permet à l'opérateur du réseau d'évaluer, pendant la période de simulation, le temps d'attente moyen estimé des passagers à chaque station du réseau.

Selon un mode de mise en oeuvre, l'indicateur de durée de trajet permet à l'opérateur du réseau d'évaluer le temps de trajet moyen entre une station de départ et une station d'arrivée.

Selon un mode de mise en oeuvre les indicateurs de performance sont calculés pour différents moments compris entre la période de temps courante et la période de temps future. Par exemple, toutes les 15 minutes une valeur des indicateurs de performance sera estimée ; ainsi 4 valeurs différentes pour chaque indicateur seront estimées entre la période de temps courante de l'état courant et la période de temps future de l'état futur simulé, décalée dans cet exemple d'une heure de la période de temps courante de l'état courant.

Selon un mode de mise en oeuvre, la simulation de l'état futur et la nouvelle simulation du nouvel état futur est réalisé sur la base d'un itinéraire-véhicule et d'un modèle de comportement-véhicule de l'au moins un véhicule,
et dans laquelle le modèle de comportement-véhicule de l'au moins un véhicule est défini par une pluralité d'état-véhicule de l'au moins un véhicule et par au moins une règle de changement d'état-véhicule pour faire passer l'au moins un véhicule d'un état-véhicule initial à un état-véhicule suivant de la pluralité d'état-véhicule de l'au moins un véhicule,
et dans laquelle l'itinéraire-véhicule de l'au moins un véhicule comprend un sous-ensemble de stations de la pluralité de stations du mode de transport de l'au moins un mode de transport, le sous-ensemble de stations comprenant une station de départ, des stations intermédiaires, une station terminus, et, optionnellement, au moins un itinéraire intermédiaire pour aller d'une station du sous-ensemble de station à la station.

Selon un mode de mise en oeuvre, la pluralité d'état-véhicule de l'au moins un véhicule comprend l'un des état-véhicule parmi :
- véhicule arrêté à un signal,
- véhicule en déplacement,
- véhicule arrêté à une station,
- véhicule en cours de chargement,
- véhicule en cours de fermeture,
- véhicule arrivé au terminus.
et dans laquelle l'au moins une règle de changement d'état-véhicule de l'au moins un véhicule comprend au moins une règle de sécurité et au moins une règle de détermination d'une vitesse de déplacement.

Selon un mode de mise en oeuvre, la simulation de l'état futur et la nouvelle simulation du nouvel état futur est réalisée sur la base d'un modèle de comportement-passager de la pluralité de passagers du mode de transport, le modèle de comportement-passager de la pluralité de passagers étant défini par une pluralité d'état-passager de l'au moins un passager et par au moins une règle de changement d'état-passager pour faire passer l'au moins un passager d'un état initial à un état suivant de la pluralité d'état-passager de la pluralité de passagers .

Selon un mode de mise en oeuvre, le réseau de transport comprend au moins une correspondance entre un mode de transport et un autre mode de transport de l'au moins un mode de transport, la correspondance étant définie par une station de correspondance de la pluralité de stations du mode de transport de l'au moins un mode de transport, vers une autre station de correspondance de la pluralité de stations de l'autre mode de transport de l'au moins une mode de transport,
et la pluralité d'état-passager de l'au moins un passager comprend l'un des état-passager parmi :
   - en attente station,
   - embarqué,
   - en marche correspondance,
   - en cours d'embarquement,
   - en cours de débarquement,
   - arrivé à destination.
et, optionnellement, l'au moins une règle de changement d'état-passager de l'au moins un passager comprend au moins au moins une règle de détermination de la vitesse de marche conditionnée par le profil-passager de l'au moins un passager.

Pour sa bonne compréhension, l'invention est décrite en référence aux dessins ci-annexés représentant, à titre d'exemple non limitatif, une forme de réalisation d'un dispositif selon l'invention. Les mêmes références sur les dessins désignent des éléments similaires ou des éléments dont les fonctions sont similaires.

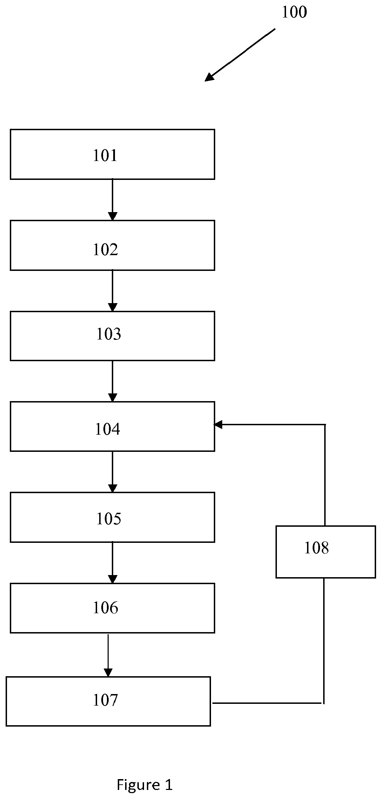

La figure 1 est un organigramme schématique des étapes du procédé selon l'invention.
La figure 2 est une représentation schématique d'un modèle de comportement de véhicule.
La figure 3 est une représentation schématique d'un modèle de comportement de passager.

Le procédé 100 selon l'invention concerne un réseau de transport multimodal, c'est-à-dire un réseau de transport comprenant un ou plusieurs modes de transport : le réseau de transport peut comprendre par exemple un mode de transport ferroviaire, et/ou un mode de transport de type métro souterrain, et/ou un mode de transport de type tramway, avec chacun différentes lignes de train ou de métro ou de tramway, voire également un mode de transport routier de type véhicule privé et/ou de type bus, avec plusieurs itinéraires et/ou plusieurs lignes de bus. Le réseau peut également comprendre des modes de transport aériens, voire maritime ou fluviaux.

Chaque mode de transport comprend donc une ou plusieurs lignes ou itinéraires. Chaque ligne ou itinéraire d'un mode de transport comprend plusieurs arrêts ou stations, dont une station de départ, et une station d'arrivée. A ces différentes lignes sont affectés un ou plusieurs véhicules, configurés pour se déplacer le long de ces lignes, entre la station de départ d'une ligne et la station terminale de la ligne, en s'arrêtant à toutes ou partie des stations intermédiaires de la ligne à des horaires programmés par un opérateur.

Les utilisateurs sont des passagers, qui embarquent dans les véhicules qui s'arrêtent à une station et qui débarquent lorsqu'ils ont atteint la destination finale de leur itinéraire, ou lorsqu'ils ont atteint une destination intermédiaire de leur itinéraire.

Des correspondances existent pour permettre aux passagers d'une ligne d'un mode de transport de rejoindre une autre ligne d'un même mode ou d'un autre mode de transport, grâce à une liaison, en général pédestre, entre une station de ladite ligne et une autre station de ladite autre ligne.

Des informations de terrain sont collectées par différents instruments de collectes positionnés pour mesurer différents paramètres liés aux différents mode de transport ; ces instruments de collectes permettent de collecter des informations terrains pour connaître :
- le nombre de passagers en attente à chaque station ;
- le nombre de passager qui embarque sur et/ou qui débarque d'un véhicule ;
- la position des véhicules à chaque instant ;

Ces instruments de collectes peuvent être positionnés, par exemple :
- aux stations d'arrêt des véhicules, pour compter les passagers en attente à chaque station ;
- dans les véhicules et/ou à l'entrée des véhicules, pour compter les passagers qui embarquent et/ou qui débarquent,
- sur les véhicules pour mesurer la position respective à tout instant de chacun des véhicules.

Ces instruments de collectes peuvent être des capteurs, des applications d'apprentissage basés sur des données statistiques, ou des applications de télé-billetique pour l'achat de billets à distance.

D'autres informations liées à chacun des modes de transport, telles que par exemple les tableaux récapitulatifs des horaires programmés des arrêts des différents véhicules aux différentes stations de chaque ligne ou itinéraire du mode de transport considéré, sont fournies par l'opérateur sous la forme de tables horaires pour ce mode de transport. Ainsi pour chaque véhicule et chaque station des différentes lignes de ce mode de transport, les tables horaires comprennent : :
- un itinéraire du véhicule, sous la forme d'une liste de stations intermédiaires, pour aller d'une station origine à une station destination du même mode de transport ;
- une heure de passage prévue du véhicule à la station origine, à la station destination, et à chaque station intermédiaire de la liste de stations de l'itinéraire entre la station origine et la station destination.

D'autres informations liées aux arrivées futures des passagers à des stations de départ pour se rendre à différentes stations d'arrivées, sont également disponibles sous la forme d'une matrice origine-destination et décrivent la répartition d'un flux global prévisionnel de nouveaux passagers du réseau multimodal, pendant une période de temps déterminée, entre les différents binômes possibles formés par une station de départ, ou station origine, d'un mode de transport et une station d'arrivée, ou station destination, du même mode de transport ou d'un autre mode de transport.

D'autre part, à tout moment, il est possible d'estimer d'autres paramètres propres à chaque mode de transport, par exemple :
∘ un nombre estimé de passagers additionnels venant s'ajouter aux passagers en attente aux stations du mode de transport, au cours de période de temps prédéterminée,
∘ une charge estimée dans un véhicule du mode de transport,
∘ une répartition estimée de passagers entre différentes destinations choisies parmi les stations des différents modes de transport du réseau multimodal,

A chaque instant, un état courant d'un mode de transport est défini par une valeur d'au moins un paramètre du mode de transport, ladite valeur étant mesurée par un capteur ou un instrument de collecte de données, ou lue sur un serveur, ou estimée;

Le procédé 100 comprend une première étape de détermination 101, pour chaque mode de transport du réseau multimodal, de l'état courant ainsi défini du mode de transport.

Selon un mode de mise en oeuvre, un état courant de chaque mode de transport est déterminé régulièrement, selon une périodicité relativement courte, toute les 5 minutes par exemple.

Le procédé 100 comporte une étape de simulation 102, fine et détaillée, d'un état futur de chaque mode de transport, sur la base de l'état courant du mode de transport et d'une matrice origine destination pour la période de temps correspondant à l'instant considéré pour la détermination de l'état courant.

Selon un mode de mise en oeuvre l'étape de simulation 102 simule un état futur qui est une prédiction de l'évolution de l'état du réseau après une période de prédiction, définie comme un temps écoulé entre l'instant considéré pour la détermination de l'état courant et l'instant considéré pour la détermination de l'état futur ; la durée de la période de prédiction sera, par exemple, selon un mode de mise en oeuvre, d'une heure après la détermination de l'état courant.

Ainsi selon un mode de mise en oeuvre le procédé 100 permettra de prédire, sur la base de l'état courant tel que déterminé toutes les 5 minutes environ, l'état futur prédit une heure après la détermination dudit état courant.

Selon un mode de mise en oeuvre, la simulation 102 fait intervenir un ou plusieurs modèles qui décrivent le comportement des différents éléments constitutifs du réseau de transport multimodal, y compris les passagers du réseau, et qui décrivent les interactions entre ces différents éléments. Pour simuler, de manière fine et détaillée, un état futur, par exemple une heure après l'état courant déterminé, la simulation 102 simule l'évolution pendant une heure de l'état de chaque composant du système de transport, y compris les passagers, et les interactions entre ces composants et les passagers, par pas très fin, par exemple par pas d'une seconde.

Selon un mode de mise en oeuvre, l'étape de simulation 102 simule l'avancement des passagers dans les correspondances, représentées par exemple sous la forme de corridors entre les stations qui sont ainsi mises en correspondances.

Selon un mode de mise en oeuvre de simulation 102, les passagers sont traités selon leur profil, le profil des passagers pouvant être caractérisé une préférence de déplacement, cette préférence de déplacement étant associée à un coefficient de déplacement pour chaque mode de transport, le coefficient de déplacement étant déterminé par exemple par un âge des passagers, un sexe des passagers, et/ou une catégorie socio-professionnelles des passagers. Selon un mode de mise en oeuvre, la simulation 102 considère une hypothèse de répartition des passagers par profil.

Selon un mode de mise en oeuvre, la simulation du déplacement des passagers dans les corridors des correspondances prend en compte le profil des passagers. Aux nombres de passagers estimés selon le dernier état courant déterminé du mode de transport, pour les stations d'une correspondance donnée, l'hypothèse de répartition des passagers par profils est appliquée pour estimer un déplacement des passagers dans le corridor entre les stations de la correspondance, et le cas échéant, en fonction également de caractéristiques complémentaires du corridor considéré.

Ceci permet d'obtenir une estimation du temps de parcours du corridor par chaque passager. Si la densité de passagers est élevée, le temps de parcours pourra être plus élevée, ce qui est susceptible de provoquer un retard du ou des passagers considérés par rapport à la correspondance souhaitées par ces derniers.

Ce retard, lié à une charge insuffisamment maîtrisée dans le réseau, se traduira par un impact sur l'état futur prédit et sur les indicateurs de performance des modes de transport concernés du réseau, indicateurs de performance qui seront évalués à l'étape suivante du procédé. Cet impact permettra à un opérateur global du réseau, assisté par l'outil mettant en oeuvre le procédé 100, de déterminer des actions régulatrices appropriées.

Selon un mode de mise en oeuvre, de même que l'étape de simulation 102 simule l'avancement des passagers dans les correspondances, l'étape de simulation 102 simule également les interactions entre les passagers et les véhicules qui arrivent aux stations. Lorsque le véhicule arrive à une station, deux interactions se produisent, (1) des passagers qui embarquent sur le véhicule (2) des passagers qui débarquent du véhicule. Le véhicule restera à l'arrêt tant que son temps d'attente sera non nul. Plusieurs phénomènes interviennent dans le calcul du temps d'attente. Il peut y avoir un temps d'arrêt minimal, un horaire de départ au plus tôt ou un blocage intempestif des portes. Ce temps permettra à une sélection de passagers de débarquer puis embarquer. Une fois ce temps réduit à 0, une tentative de départ et de fermeture des portes est effectué. Dans le cas où ce ne serait pas possible d'avancer (un objet dans l'infrastructure physique de la ligne empêche son avancement par exemple) le véhicule reste à quai, et les portes restent ouvertes;

Un blocage intempestif de porte dans un train peut avoir un impact sur la progression des trains qui passent par la même station (les trains doivent respecter une distance minimale de sécurité). Cela peut avoir un effet domino aboutissant à la constitution d'une file d'attente qui se forme en générant un retard sur plusieurs véhicules.

Le blocage des portes est dû à un débit d'entrée et/ou de sortie non maîtrisé ou non prévu des passagers. Pouvoir prédire ce phénomène avant qu'il arrive est un enjeu majeur : cela permet à un opérateur d'augmenter sa réactivité aux problèmes afin de pouvoir appliquer des actions de régulation pour enlever la charge de l'endroit le plus chargé du réseau. D'autre part, cela permet à un opérateur de quantifier l'ampleur du problème afin d'avoir une information fiable sur le temps du retour à la normale.

Selon un mode de mise en oeuvre, de même que l'étape de simulation 102 simule l'avancement des passagers dans les correspondances, et les interactions entre les passagers et les véhicules qui arrivent aux stations, l'étape de simulation 102 simule également le mouvement de chaque véhicule dans deux environnements, un environnement logique et un environnement physique. L'environnement logique représente le réseau tel qu'il peut être vu par le passager ou présenté par l'offre de transport. Ainsi, les stations peuvent être reliées entre elles par des correspondances ou par des sections. Les correspondances correspondent aux corridors de correspondances entre stations, tandis que les sections représentent une portion de trajet assurée par un véhicule du mode de transport considéré, sur une ligne qui relie deux stations. L'environnement physique représente le réseau tel qu'il existe avec ses caractéristiques physiques dans la réalité pour les véhicules. Les voies constituent les tronçons de route, du rail et plus généralement des tronçons de tous les éléments physiques d'un réseau de transport adapté au mouvement d'un véhicule ; d'autre part des jonctions entre les différentes voies sont assurées par un ensemble d'échangeurs qui relient entre eux les tronçons de route, ou de bifurcations ou d'aiguillages qui relient entre elles les tronçons de voies ferrées, et plus généralement d'éléments physiques qui permettent de faire la jonction entre différents tronçons. Selon ce mode de mise en oeuvre, la simulation 102 applique les différentes règles que le véhicule doit appliquer et les contraintes qu'il doit respecter pour réaliser sa mission. Selon le point de vue logique, la simulation détermine où et quand le véhicule doit s'arrêter, combien de temps il doit attendre à chaque arrêt, le retard autorisé, etc. Selon le point de vue physique, la simulation détermine le tronçon ou l'aiguillage qu'il doit emprunter, la vitesse qu'il doit respecter.
La simulation des interactions du véhicule avec l'infrastructure physique de la ligne sur laquelle il circule pend en compte les contraintes liées au trafic telles que par exemple la densité du trafic routier, les règles de sécurité, notamment pour le ferroviaire, le respect des panneaux de signalisation. Ces règles peuvent être différentes d'un mode de transport à un autre.

Selon un mode de mise en oeuvre, la simulation 102 de l'état futur est réalisée sur la base d'un itinéraire-passager de chaque passager de chaque mode de transport ; l'itinéraire-passager comprend une destination-passager et est déterminé au cours de l'étape de simulation 102 de manière à attribuer à chaque passager un itinéraire en fonction de l'état du réseau au moment considéré, et en fonction du profil-passager du passager, i.e. par exemple selon une hypothèse de répartition des passagers à une heure donnée entre différents profils.

Selon un mode de mise en oeuvre, les itinéraires sont attribués aux ensembles de passagers en attente à chaque station du réseau multimodal, selon une procédure dite d'affectation dynamique multimodale, bien connue de l'homme du métier: selon cette procédure, pour chaque station du réseau multimodal, un ou plusieurs itinéraires, entre cette station considérée comme station origine et l'une quelconque des autres stations du réseau, considérée comme station de destination, sont attribués à l'ensemble des passagers présents sur le réseau à cette station d'origine, y compris le flux additionnel estimé selon les données de la matrice origine destination, de sorte que le temps de parcours soit optimal globalement pour cet ensemble de passagers. Cette procédure comprend trois étapes, appliquées successivement et itérativement, pour chaque binôme possible formé par une station de départ, ou station origine, d'un mode de transport et une station d'arrivée, ou station destination, du même mode de transport ou d'un autre mode de transport :
1. une première étape de calcul pour l'ensemble des itinéraires possibles entre la station origine et la station destination d'un temps de parcours, le temps de parcours de chacun des itinéraires étant déterminé en fonction des conditions de circulation sur le réseau multimodal à cette étape de la procédure;
2. une deuxième étape de détermination d'une répartition de l'ensemble des passagers présents sur le réseau à la station d'origine, y compris le flux additionnel estimé selon les données de la matrice origine destination, sur les différents itinéraires possibles, la répartition étant réalisée en fonction des temps de parcours calculés ;
3. une troisième étape de simulation des conséquences de la répartition déterminée sur les conditions de circulation sur le réseau multimodal, de façon à déterminer de nouvelles conditions de circulation sur le réseau.
Ces trois étapes sont répétées de manière à converger vers :
- une répartition de l'ensemble des passagers présents sur le réseau à la station d'origine, et
- des conditions de circulation correspondantes sur le réseau,
qui sont optimales au sens où le temps de parcours est globalement minimum pour l'ensemble des passagers considérés.

Ainsi, selon un mode de mise en oeuvre, un état futur, dans une heure par exemple, est prédit toutes les 5 minutes par exemple, sur la base de l'état courant à cet instant, i.e. sur la base des dernières données terrains collectées, notamment sur la base des nombres de passagers en attente aux différentes stations, des nombres de passagers embarqués dans les différents véhicules, et des flux de passagers additionnels qui entreront dans le réseau pendant la période de prédiction selon les indications de la matrice origine-destination, qui permet de déterminer une hypothèse de répartition des passagers par profil-passager et par destination-passager, cette hypothèse de répartition étant, selon ce mode de réalisation, prédéterminée pour chaque mode de transport.

Après avoir simulé à l'étape de simulation 102, de manière fine et détaillée, par pas d'une seconde par exemple, l'évolution, en une heure par exemple, de l'état courant déterminé vers un état futur simulé de chaque mode de transport du réseau multimodal, le procédé 100 comprend une étape d'évaluation 103 d'au moins un indicateur de performance sur la base de l'état futur simulé de chaque mode de transport.

Selon un mode de mise en oeuvre, l'au moins un indicateur de performance comprend au moins l'un des indicateurs de ponctualité, régularité, taux d'occupation, temps d'attente, durée de trajet.

Selon un mode de mise en oeuvre, l'indicateur de ponctualité permet à l'opérateur du réseau d'évaluer, pendant la période de simulation, l'avance ou le retard des véhicules par rapport au heures de passage prévues par l'opérateur.

Selon un mode de mise en oeuvre, l'indicateur de régularité permet à l'opérateur du réseau d'évaluer, pendant la période de simulation, l'écart estimé entre les véhicules qui circulent le long d'un même itinéraire et de comparer cet écart à un écart nominal.

Selon un mode de mise en oeuvre l'indicateur de taux d'occupation permet à l'opérateur du réseau d'évaluer, pendant la période de simulation, le confort des passagers en comparant ce taux d'occupation ou cette charge estimé à un taux d'occupation ou charge nominal.

Selon un mode de mise en oeuvre, l'indicateur de temps d'attente permet à l'opérateur du réseau d'évaluer, pendant la période de simulation, le temps d'attente moyen estimé des passagers à chaque station du réseau.

Selon un mode de mise en oeuvre, l'indicateur de durée de trajet permet à l'opérateur du réseau d'évaluer le temps de trajet moyen entre une station de départ et une station d'arrivée.

Le procédé comprend une étape de détermination 104 d'au moins une action régulatrice sur au moins un mode de transport du réseau multimodal, en fonction de l'évaluation 103 de l'au moins un indicateur. L'au moins une action régulatrice comprend au moins l'une des actions parmi :
∘ ajouter un véhicule,
∘ modifier un itinéraire d'un véhicule pour aller d'une station à une autre station du mode de transport,
∘ modifier une heure de passage de l'au moins un véhicule à une station de la pluralité de stations,
∘ fermer une station pendant un certain temps,
∘ mettre en place un bus de substitution,
∘ fermer un tronçon pendant un certain temps,
∘ réduire le débit,
∘ ajouter une station, et
∘ supprimer un arrêt.

Selon un mode de mise en oeuvre, chaque action régulatrice a pour effet de modifier, au moins fictivement dans un premier temps, les conditions de fonctionnement du mode de transport concerné, et plus spécifiquement l'offre de service, la table horaire en particulier. Ainsi, l'étape de nouvelle simulation 105 générera un nouvel état futur ; une étape de nouvelle évaluation 106 de l'au moins un indicateur de performance du mode de transport sur la base du nouvel état futur, suivie d'un étape de comparaison 107 du résultat de la nouvelle évaluation et de l'évaluation précédente de l'au moins un indicateur de performance permettra d'apprécier si l'indicateur de performance s'est amélioré.

Le procédé répète 108 des étapes de détermination 104 d'au moins une action régulatrice, de nouvelle simulation 105, de nouvelle évaluation 106 et de comparaison 107 jusqu'à ce qu'un résultat de la comparaison 107 indique une amélioration de l'au moins un indicateur de performance, autrement dit jusqu'à ce que les actions régulatrices aient un effet prévisionnel satisfaisant sur le ou le(s) indicateur(s) de performance(s).

Si les actions régulatrices s'avèrent avoir un effet prévisionnel satisfaisant sur le ou le(s) indicateur(s) de performance(s) alors ces actions pourront être mises en oeuvre par l'opérateur du réseau multimodal, de manière à améliorer effectivement la performance du réseau conformément aux indicateurs déterminés.

Ainsi selon ces dispositions, le procédé permet d'aider l'opérateur du réseau multimodal à mieux planifier son offre de mobilité multimodale pour mieux répondre à l'évolution dynamique des flux de mobilité, permettant ainsi d'améliorer la ponctualité globale du service, en considérant le point de vue du passager (heure d'arrivée optimisée pour le passager plutôt que heure de départ/arrivée du véhicule de transport prévue par l'opérateur), en permettant à l'opérateur de tester l'impact de différents scénarios de régulation sur le système de mobilité.

Selon un mode de mise en oeuvre, la simulation de l'état futur et la nouvelle simulation du nouvel état futur sont réalisées sur la base d'un itinéraire-véhicule et d'un modèle de comportement-véhicule de chaque véhicule.

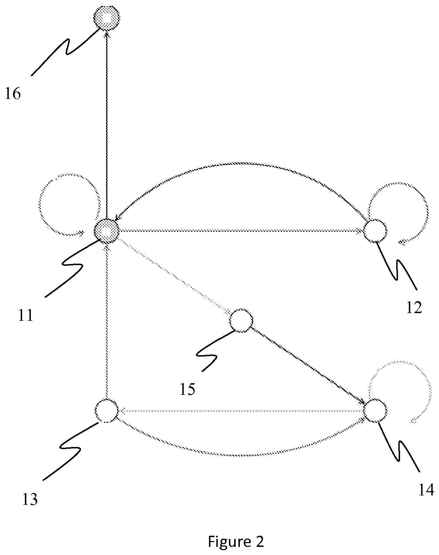

Selon un mode de mise en oeuvre, illustré à la figure 2 le modèle de comportement-véhicule d'un véhicule est défini par une pluralité d'états du véhicule, aussi appelé état-véhicule, et par des règles de changement d'état-véhicule pour faire passer le véhicule d'un état-véhicule initial à un état-véhicule suivant de la pluralité d'état-véhicule dudit véhicule.

Selon un mode de mise en oeuvre, la pluralité d'état-véhicule de l'au moins un véhicule comprend l'un des état-véhicule parmi :
- véhicule arrêté à un signal 12,
- véhicule en déplacement 11,
- véhicule arrêté à une station 15,
- véhicule en cours de chargement 14,
- véhicule en cours de fermeture 13,
- véhicule arrivé au terminus 16.

Selon un mode de réalisation, les règles de changement d'état-véhicule de d'un véhicule d'un mode de transport comprend les règles de sécurités et les règles de détermination de la vitesse de déplacement.

Selon un mode de mise en oeuvre, les règles de changement d'état sont celles décrites dans le tableau ci-dessous, en référence à la figure 2 :

| **Règle** | **Description** | **Etat du véhicule** | **Etat prochain du vehicle** |
|---|---|---|---|
| déplacer | permet de tenter de faire physiquement avancer le véhicule si l'état le permet. | « Arrêté à un signal » | « Arrêté à un signal » : le véhicule détecte un objet signalant une obligation d'arrêt non prévu. Le véhicule reste dans cette état tant que l'objet concerné émet un signal différent |
| | | ou | |
| | | « en déplacement » | |
| | | | « Arrêté à une station » : le véhicule détecte un stop auquel le doit s'arrêter |
| arrêter | permet de s'arrêter à la station prochaine à visiter. | « Arrêté à une station » | « En cours de chargement » |
| embarquer des passagers | permet d'opérer une sélection des passagers qui veulent emprunter le véhicule (i.e. si l'itinéraire le suppose) et qui vont effectivement entrer dans celui-ci | « En cours de chargement » | Le véhicule restera dans l'état « en cours de chargement » tant que son temps d'attente sera non nul. Plusieurs phénomènes interviennent dans le calcul du temps d'attente. Il peut y |
| débarquer des passagers | permet d'opérer une sélection des passagers qui veulent sortir du véhicule (i.e. si l'itinéraire le suppose) et qui vont effectivement libérer celui-ci | « En cours de chargement » | avoir un temps d'arrêt minimal, un horaire de départ au plus tôt ou un blocage intempestif des portes. Ce temps lui permettra de sélectionner des passagers à débarquer puis embarquer. Une fois ce temps réduit à 0, une tentative de départ et de fermeture des portes est effectuée par la règle Close-Doors, plaçant le véhicule dans un état « en cours de fermeture » |
| attendre | permet de décrémenter l'attente nécessaire (lié au plan horaire, ou au temps d'attente minimale) du véhicule | « En cours de chargement » | |
| Fermer portes | tente une opération de fermeture des portes en fonction de ce que répond la vérification des objets devant le véhicule | « en cours de fermeture » | Le vehicle retournera dans l'état « en cours de chargement » dans le cas où ce n'est pas possible d'avancer (un objet dans l'infrastructure physique empêche son avancement) modélisant le fait que les portes restent ouvertes ; le véhicule reste à quai. |
| redémarrer | permet au véhicule de repasser en mode déplacement, si la fermeture des portes a bien été opérée | « en cours de fermeture » | « en déplacement » |

Selon un mode de mise en oeuvre, l'itinéraire d'un véhicule, aussi appelé itinéraire-véhicule, comprend un sous-ensemble de stations de la pluralité de stations du mode de transport concerné, le sous-ensemble de stations comprenant une station de départ, des stations intermédiaires, une station terminus, et, optionnellement, au moins un itinéraire intermédiaire pour aller d'une station du sous-ensemble de station à la station.

Selon un mode de mise en oeuvre, la simulation de l'état futur et la nouvelle simulation du nouvel état futur sont réalisées sur la base d'un modèle de comportement des passagers, ici appelé comportement-passager, du mode de transport.

Selon un mode de mise en oeuvre, un passager désigne un groupe de passager qui ont le même profil, comme indiqué ci-avant, et qui voyagent ensemble à travers le réseau de transport.

Selon un mode de mise en oeuvre, le modèle de comportement des passagers est défini par une pluralité d'états des passagers, ici appelé état-passager, et par au moins une règle de changement d'état-passager pour faire passer ledit passager d'un état-passager initial à un état-passager suivant.

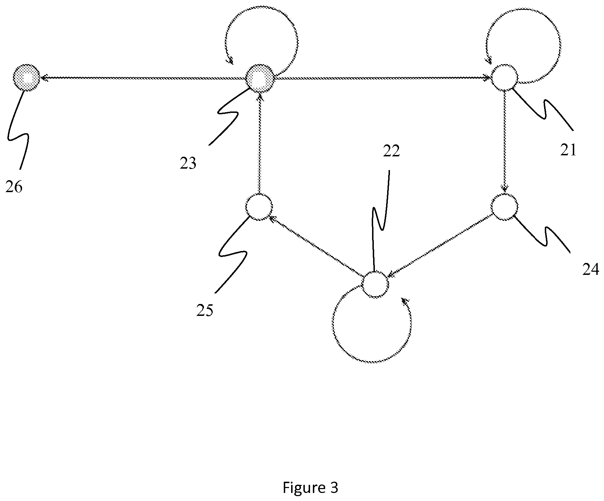

Selon un mode de mise en oeuvre, illustré en figure 3, la pluralité d'état-passager comprend l'un des état-passager parmi :
- en attente station 21,
- embarqué 22,
- en marche correspondance 23,
- en cours d'embarquement 24,
- en cours de débarquement 25,
- arrivé à destination 26.

Selon un mode de mise en oeuvre, l'au moins une règle de changement d'état-passager sont celles décrites dans le tableau ci-dessous, en référence à la figure 3 :

| **Règle** | **Description** | **Etat du passager** | **Etat prochain du passager** |
|---|---|---|---|
| Embarquer | permet au passager ou groupe de passagers de physiquement rentrer dans le véhicule. | « En attente station » | « En cours d'embarquement » : le passager reste dans cet état transitoire jusqu'à la fin d'un temps d'embarquement prédéterminé. |
| débarquer | permet au passager ou groupe de passagers de sortir du véhicule dans lequel il se trouvait. | « embarqué » | « En cours de débarquement »: le passager reste dans cet état transitoire jusqu'à la fin d'un temps de débarquement prédéterminé. |
| Se déplacer d'une station à une autre | permet au groupe de passagers de se déplacer dans le réseau en passant d'une station à une autre. | « En marche correspondance » | « En marche correspondance » : le groupe de passagers pourra effectuer tout un cheminement à pied passant par des correspondances, conservant cet état jusqu'à ce qu'il décide d'emprunter un véhicule à une station. Il passera alors dans un état « En attente station ». Une fois que le passager n'a plus de stations ou de correspondances à visiter il passera alors dans un état final « arrivé à destination ». |
| | | « En cours d'embarquement » | « embarqué »: il restera dans cet état tant que le véhicule ne sera pas en station. |
| | | « En cours de débarquement » | Le passager accède à une station et ainsi poursuit son itinéraire en retournant dans l'état « En marche correspondance » |

## Revendications

1. Procédé (100) de régulation d'un réseau de transport, le réseau de transport étant utilisé par une pluralité de passagers du réseau et le réseau de transport comprenant au moins un mode de transport, chaque mode de transport de l'au moins un mode de transport comprenant au moins un véhicule et une pluralité de stations, une station origine de la pluralité de stations de l'au moins un mode de transport étant reliée par une pluralité d'itinéraires, chaque itinéraire de la pluralité d'itinéraires comprenant une liste de stations intermédiaires de la pluralité de stations, à une station destination de la pluralité de stations, chaque itinéraire comprenant en outre un ou plusieurs tronçons adaptés au mouvement de l'au moins un véhicule entre deux stations de la pluralité de stations, une table horaire de l'au moins un mode de transport définissant une heure de passage de l'au moins un véhicule à la station origine, à la station destination, et à chaque station de la liste de stations intermédiaires de l'itinéraire, la pluralité de passagers du réseau comprenant, pour chaque station de la pluralité de stations de l'au moins un mode de transport, un nombre de passagers en attente à la station, le nombre de passagers en attente à la station étant déterminé à partir de données captées par au moins un instrument de collecte de données, une matrice origine destination définissant, pour une période de temps, et pour un binôme formé par la station origine et la station destination, un nombre additionnel de passagers qui entreront sur le réseau par la station origine, pendant la période de temps, pour rejoindre la station destination, un débit définissant un débit d'entrée ou de sortie des passagers de l'au moins un véhicule pendant un arrêt de l'au moins un véhicule à une station de la pluralité de stations,
le procédé comprenant les étapes suivantes :
pour chaque mode de transport de l'au moins un mode de transport,
- détermination (101) d'un état courant du mode de transport défini pour un temps courant à l'intérieur de la période de temps ;
- simulation (102) d'un état futur, pour un temps futur, du mode de transport sur la base de l'état courant, et du nombre additionnel de passagers qui entreront sur le réseau pendant la période de temps selon la matrice origine destination ;
- évaluation (103) d'au moins un indicateur de performance sur la base de l'état futur du mode de transport ;
- détermination (104) d'au moins une action régulatrice sur l'au moins un mode de transport en fonction de l'évaluation de l'au moins un indicateur ;
- nouvelle simulation (105) d'un nouvel état futur, pour le temps futur, sur la base de l'état courant, pour le temps courant, et du nombre additionnel de passagers qui entreront sur le réseau pendant la période de temps selon la matrice origine destination ;
- nouvelle évaluation (106) de l'au moins un indicateur de performance du mode de transport sur la base du nouvel état futur ;
- comparaison (107) du résultat de la nouvelle évaluation et de l'évaluation de l'au moins un indicateur de performance ;
- répétition (108) des étapes de détermination (104) d'au moins une action régulatrice, de nouvelle simulation (105), de nouvelle évaluation (106) et de comparaison (107) jusqu'à ce qu'un résultat de la comparaison (107) indique une amélioration de l'au moins un indicateur de performance,
- mise en oeuvre de ladite au moins une action déterminée à la dernière occurrence de l'étape de détermination (104) de manière à améliorer la performance du réseau,
la simulation (102) de l'état futur et la nouvelle simulation (105) du nouvel état futur étant respectivement réalisées, pour au moins un temps intermédiaire entre le temps courant et le temps futur, en répartissant sur la pluralité d'itinéraires joignant la station origine et la station destination, selon une procédure de répartition prédéterminée, le nombre de passagers en attente à ladite station origine additionné au nombre additionnel estimé pour rejoindre ladite station destination, pour ladite station origine et pour une période de temps incluant l'au moins un temps intermédiaire, sur la base de la matrice origine destination
dans lequel l'état courant du mode de transport est défini par au moins un paramètre, l'au moins un paramètre comprenant l'un parmi :
- le nombre de passagers en attente aux stations de la pluralité de stations du mode de transport,
- une position et une charge de l'au moins un véhicule du mode de transport,
- une répartition par profil-passager, du nombre de passagers en attente aux stations de la pluralité de stations du mode de transport,
et dans lequel une valeur est déterminée par l'au moins un instrument de collecte de données, pour chaque paramètre de l'au moins un paramètre, à l'étape de détermination ;
l'au moins une action régulatrice du mode de transport comprenant au moins l'une des actions parmi :
∘ ajouter un véhicule,
∘ modifier un itinéraire d'un véhicule pour aller d'une station de la pluralité de stations à une autre station de la pluralité de stations du mode de transport,
∘ modifier une heure de passage de l'au moins un véhicule à une station de la pluralité de stations,
∘ fermer une station pendant un certain temps,
∘ mettre en place un bus de substitution,
∘ fermer au moins l'un des un ou plusieurs tronçons pendant un certain temps,
∘ réduire le débit,
∘ ajouter une station, et
∘ supprimer un arrêt à une station.

2. Procédé selon la revendication 1, dans lequel la procédure de répartition prédéterminée est réalisée sur la base d'un profil-passager associé à chaque passager de la pluralité de passagers en attente à ladite station origine, et en fonction d'un état intermédiaire du réseau défini au temps intermédiaire.

3. Procédé selon la revendication 2, dans lequel un itinéraire-passager est associé à chaque passager de la pluralité de passagers en attente à ladite station origine, l'itinéraire-passager étant déterminé en fonction du profil-passager.

4. Procédé selon l'une des revendications 1 à 3, dans lequel la procédure de répartition prédéterminée est une procédure d'affection dynamique multimodale.

5. Procédé selon l'une des revendications précédentes, dans lequel l'au moins un instrument de collecte de données est un capteur, ou une application d'apprentissage de données statistiques, ou une application de télé-billetique d'achat de billets à distance.

6. Procédé selon la revendication 5, dans laquelle l'itinéraire-passager comprend une liste de stations, chaque station de ladite liste étant une station de la pluralité de stations de l'au moins un mode de transport, et chaque station de ladite liste étant déterminée en fonction de l'heure de passage de l'au moins un véhicule de chaque mode de transport de l'au moins un mode de transport aux stations de la pluralité de stations de chaque mode de transport de l'au moins un mode de transport, et de manière à optimiser l'heure de passage à la destination-passager, et en fonction du profil-passager.

7. Procédé selon l'une des revendications précédentes, dans laquelle l'au moins un mode de transport comprend au moins l'un des modes de transport parmi le mode de transport : par voie routière, par voie ferrée, par voie aérienne, par voie fluviale, par voie maritime.

8. Procédé selon l'une des revendications précédentes, dans laquelle l'au moins un indicateur de performance du réseau de transport comprend au moins l'un des indicateurs de: ponctualité, régularité, taux d'occupation, temps d'attente, durée de trajet.

9. Procédé selon l'une des revendications précédentes, dans laquelle la simulation de l'état futur et la nouvelle simulation du nouvel état futur est réalisé sur la base d'un itinéraire-véhicule et d'un modèle de comportement-véhicule de l'au moins un véhicule,
et dans laquelle le modèle de comportement-véhicule de l'au moins un véhicule est défini par une pluralité d'état-véhicule de l'au moins un véhicule et par au moins une règle de changement d'état-véhicule pour faire passer l'au moins un véhicule d'un état-véhicule initial à un état-véhicule suivant de la pluralité d'état-véhicule de l'au moins un véhicule,
et dans laquelle l'itinéraire-véhicule de l'au moins un véhicule comprend un sous-ensemble de stations de la pluralité de stations du mode de transport de l'au moins un mode de transport, le sous-ensemble de stations comprenant une station de départ, des stations intermédiaires, une station terminus, et, optionnellement, au moins un itinéraire intermédiaire pour aller d'une station du sous-ensemble de station à la station.

10. Procédé selon la revendication 9,
dans laquelle la pluralité d'état-véhicule de l'au moins un véhicule comprend l'un des état-véhicule parmi :
- véhicule arrêté à un signal (12),
- véhicule en déplacement (11),
- véhicule arrêté à une station (15),
- véhicule en cours de chargement (14),
- véhicule en cours de fermeture (13),
- véhicule arrivé au terminus (16).
et dans laquelle l'au moins une règle de changement d'état-véhicule de l'au moins un véhicule comprend au moins une règle de sécurité et au moins une règle de détermination d'une vitesse de déplacement.

11. Procédé selon l'une des revendications précédentes, dans laquelle la simulation de l'état futur et la nouvelle simulation du nouvel état futur est réalisée sur la base d'un modèle de comportement-passager de la pluralité de passagers du mode de transport,
le modèle de comportement-passager de la pluralité de passagers étant défini par une pluralité d'état-passager de l'au moins un passager et par au moins une règle de changement d'état-passager pour faire passer l'au moins un passager d'un état initial à un état suivant de la pluralité d'état-passager de la pluralité de passagers .

12. Procédé selon la revendication 11, dans laquelle le réseau de transport comprend au moins une correspondance entre un mode de transport et un autre mode de transport de l'au moins un mode de transport, la correspondance étant définie par une station de correspondance de la pluralité de stations du mode de transport de l'au moins un mode de transport, vers une autre station de correspondance de la pluralité de stations de l'autre mode de transport de l'au moins une mode de transport,
et dans laquelle la pluralité d'état-passager de l'au moins un passager comprend l'un des état-passager parmi :
- en attente station,
- embarqué,
- en marche correspondance,
- en cours d'embarquement,
- en cours de débarquement,
- arrivé à destination.
et dans laquelle, optionnellement, l'au moins une règle de changement d'état-passager de l'au moins un passager comprend au moins au moins une règle de détermination de la vitesse de marche conditionnée par le profil-passager de l'au moins un passager.

## Patentansprüche

1. Verfahren (100) zur Regelung eines Transportnetzes, wobei das Transportnetz von einer Vielzahl von Fahrgästen des Netzes genutzt wird, und das Transportnetz mindestens einen Transportmodus umfasst, wobei jeder Transportmodus des mindestens einen Transportmodus mindestens ein Fahrzeug und eine Vielzahl von Stationen umfasst, wobei eine Anfangsstation der Vielzahl von Stationen des mindestens einen Transportmodus durch eine Vielzahl von Routen, wobei jede Route der Vielzahl von Routen eine Liste mit Zwischenstationen der Vielzahl von Stationen umfasst, mit einer Zielstation der Vielzahl von Stationen verbunden ist, wobei jede Route weiter eine oder mehrere Teilstrecken umfasst, die der Bewegung des mindestens einen Fahrzeugs zwischen zwei Stationen der Vielzahl von Stationen angepasst sind, wobei eine Zeittabelle des mindestens einen Transportmodus eine Durchfahrzeit des mindestens einen Fahrzeugs an der Anfangsstation, an der Zielstation und an jeder Station der Liste mit Zwischenstationen der Route definiert, wobei die Vielzahl der Fahrgäste des Netzes für jede Station der Vielzahl von Stationen des mindestens einen Transportmodus eine Anzahl an wartenden Fahrgästen an der Station umfasst, wobei die Anzahl an wartenden Fahrgästen an der Station aus Daten bestimmt wird, die durch mindestens ein Datenerhebungsinstrument erfasst werden, wobei eine Anfangs-Ziel-Matrix für einen Zeitraum und ein aus der Anfangsstation und der Zielstation gebildetes Paar eine zusätzliche Anzahl an Fahrgästen definiert, die das Netz während des Zeitraums durch die Anfangsstation betreten, um zur Zielstation zu gelangen, wobei eine Mengenleistung eine Einstiegs- oder Ausstiegsmengenleistung der Fahrgäste des mindestens einen Fahrzeugs während eines Halts des mindestens einen Fahrzeugs an einer Station der Vielzahl von Stationen definiert,
wobei das Verfahren die folgenden Schritte umfasst:
für jeden Transportmodus des mindestens einen Transportmodus,
- Bestimmen (101) eines aktuellen Zustands des Transportmodus, der für eine aktuelle Zeit innerhalb des Zeitraums definiert wird;
- Simulieren (102) eines künftigen Zustands, für eine künftige Zeit des Transportmodus auf Grundlage des aktuellen Zustands und der zusätzlichen Anzahl an Fahrgästen, die das Netz während des Zeitraums gemäß der Anfangs-Ziel-Matrix betreten;
- Bewerten (103) mindestens eines Leistungsindikators auf Grundlage des künftigen Zustands des Transportmodus;
- Bestimmen (104) mindestens einer Regulierungsaktion auf mindestens einem Transportmodus je nach Bewertung des mindestens einen Indikators;
- erneutes Simulieren (105) eines neuen künftigen Zustands, für eine künftige Zeit auf Grundlage des aktuellen Zustands für die aktuelle Zeit und der zusätzlichen Anzahl an Fahrgästen, die das Netz während des Zeitraums gemäß der Anfangs-Ziel-Matrix betreten;
- erneutes Bewerten (106) mindestens eines Leistungsindikators des Transportmodus auf Grundlage des neuen künftigen Zustands;
- Vergleichen (107) des Ergebnisses der erneuten Bewertung und der Bewertung der Entwicklung des mindestens einen Leistungsindikators;
- Wiederholen (108) der Schritte des Bestimmens (104) mindestens einer Regulierungsaktion, der erneuten Simulation (105), der erneuten Bewertung (106) und des Vergleichs (107), bis ein Ergebnis des Vergleichs (107) eine Verbesserung des mindestens einen Leistungsindikators anzeigt,
- Umsetzen der mindestens einen beim letzten Auftreten des Schrittes des Bestimmens (104) bestimmten Aktion, um die Leistung des Netzes zu verbessern,
wobei das Simulieren (102) des künftigen Zustands und das erneute Simulieren (105) des neuen künftigen Zustands jeweils für mindestens eine Zwischenzeit zwischen der aktuellen Zeit und der künftigen Zeit durchgeführt werden, indem auf die Vielzahl von Routen, die zur Anfangsstation und zur Zielstation gelangen, gemäß einem vorbestimmten Verteilungsverfahren die Anzahl an wartenden Fahrgästen an der Anfangsstation verteilt wird, die zur geschätzten zusätzlichen Anzahl, um zur Zielstation zu gelangen, für die Anfangsstation und für einen Zeitraum, der die mindestens eine Zwischenzeit einschließt, auf Grundlage der Anfangs-Ziel-Matrix hinzugezählt wird
wobei der aktuelle Zustand des Transportmodus durch mindestens einen Parameter definiert wird, wobei der mindestens eine Parameter eines umfasst aus:
- der Anzahl an wartenden Fahrgästen an den Stationen der Vielzahl von Stationen des Transportmodus,
- einer Position und einer Auslastung des mindestens einen Fahrzeugs des Transportmodus,
- einer Verteilung je Fahrgastprofil der Anzahl an wartenden Fahrgästen an den Stationen der Vielzahl von Stationen des Transportmodus,
und wobei ein Wert durch mindestens ein Datenerhebungsinstrument für jeden Parameter des mindestens einen Parameters im Schritt des Bestimmens bestimmt wird;
die mindestens eine Regulierungsaktion des Transportmodus mindestens eine der Aktionen umfasst aus:
∘ Hinzufügen eines Fahrzeugs,
∘ Ändern einer Route eines Fahrzeugs, um von einer Station der Vielzahl von Stationen zu einer anderen Station der Vielzahl von Stationen des Transportmodus zu fahren,
∘ Ändern einer Durchfahrzeit des mindestens einen Fahrzeugs an einer Station der Vielzahl von Stationen,
∘ Schließen einer Station eine bestimmte Zeit lang,
∘ Einsetzen eines Ersatzbusses,
∘ Schließen mindestens einer der einen oder mehrerer Teilstrecken eine bestimmte Zeit lang,
∘ Reduzieren der Mengenleistung,
∘ Hinzufügen einer Station, und
∘ Streichen eines Halts an einer Station.

2. Verfahren nach Anspruch 1, wobei das vorbestimmte Verteilungsverfahren auf Grundlage eines Fahrgastprofils, das einem jeden Fahrgast der Vielzahl von wartenden Fahrgästen an der Anfangsstation zugeordnet wird, und je nach eines zur Zwischenzeit definierten Zwischenzustands des Netzes realisiert wird.

3. Verfahren nach Anspruch 2, wobei eine Fahrgastroute einem jeden Fahrgast der Vielzahl von wartenden Fahrgästen an der Anfangsstation zugeordnet wird, wobei die Fahrgastroute je nach Fahrgastprofil bestimmt wird.

4. Verfahren nach einem der Ansprüche 1 bis 3, wobei das vorbestimmte Verteilungsverfahren ein multimodales dynamisches Zuweisungsverfahren ist.

5. Verfahren nach einem der vorstehenden Ansprüche, wobei das mindestens eine Datenerhebungsinstrument ein Sensor, oder eine Lernapplikation für statistische Daten, oder eine Fern-E-Ticketing-Applikation zum Ferneinkauf von Fahrscheinen ist.

6. Verfahren nach Anspruch 5, wobei die Fahrgastroute eine Liste mit Stationen umfasst, wobei jede Station der Liste eine Station der Vielzahl von Stationen des mindestens einen Transportmodus ist, und jede Station der Liste je nach Durchfahrzeit des mindestens einen Fahrzeugs eines jeden Transportmodus des mindestens einen Transportmodus an den Stationen der Vielzahl von Stationen eines jeden Transportmodus des mindestens einen Transportmodus und derart, um die Durchfahrzeit am Fahrgastziel zu optimieren, und je nach Fahrgastprofil bestimmt wird.

7. Verfahren nach einem der vorstehenden Ansprüche, wobei der mindestens eine Transportmodus mindestens einen der Transportmodi aus dem Transportmodus umfasst: auf dem Straßenweg, auf dem Schienenweg, auf dem Luftweg, auf dem Flussweg, auf dem Seeweg.

8. Verfahren nach einem der vorstehenden Ansprüche, wobei der mindestens eine Leistungsindikator des Transportnetzes mindestens einen Indikator umfasst von: Pünktlichkeit, Regelmäßigkeit, Auslastung, Wartezeit, Fahrtdauer.

9. Verfahren nach einem der vorstehenden Ansprüche, wobei das Simulieren des künftigen Zustands und das erneute Simulieren des neuen künftigen Zustands auf Grundlage einer Fahrzeugroute und eines Verhaltensmodells eines Fahrzeugs des mindestens einen Fahrzeugs erfolgt,
und wobei das Verhaltensmodell eines Fahrzeugs des mindestens einen Fahrzeugs durch eine Vielzahl von Fahrzeugzuständen des mindestens einen Fahrzeugs und durch mindestens eine Änderungsregel des Fahrzeugzustands definiert wird, um das mindestens eine Fahrzeug von einem anfänglichen Fahrzeugzustand in einen folgenden Fahrzeugzustand der Vielzahl von Fahrzeugzuständen des mindestens einen Fahrzeugs übergehen zu lassen,
und wobei die Fahrzeugroute des mindestens einen Fahrzeugs eine Teilmenge an Stationen der Vielzahl von Stationen des Transportmodus des mindestens einen Transportmodus umfasst, wobei die Teilmenge an Stationen eine Startstation, Zwischenstationen, eine Endstation, und optional mindestens eine Zwischenroute umfasst, um von einer Station der Teilmenge an Stationen zur Station zu fahren.

10. Verfahren nach Anspruch 9,
wobei die Vielzahl von Fahrzeugzuständen des mindestens einen Fahrzeugs einen der Fahrzeugzustände umfasst aus:
- an einem Signal angehaltenes Fahrzeug (12),
- ein sich bewegendes Fahrzeug (11),
- ein an der Station angehaltenes Fahrzeug (15),
- ein in Ladung befindliches Fahrzeug (14),
- ein im Schließen begriffenes Fahrzeug (13),
- ein an der Endstation angelangtes Fahrzeug (16).
und wobei die mindestens eine Änderungsregel des Fahrzeugzustands des mindestens einen Fahrzeugs mindesten seine Sicherheitsregel und mindestens eine Regel zum Bestimmen einer Fortbewegungsgeschwindigkeit umfasst.

11. Verfahren nach einem der vorstehenden Ansprüche, wobei das Simulieren des künftigen Zustands und das erneute Simulieren des neuen künftigen Zustands auf Grundlage eines Fahrgastverhaltensmodells der Vielzahl von Fahrgästen des Transportmodus erfolgt,
das Fahrgastverhaltensmodell der Vielzahl von Fahrgästen durch eine Vielzahl von Fahrgastzuständen des mindestens einen Fahrgastes und durch mindestens eine Änderungsregel des Fahrgastzustands definiert wird, um den mindestens einen Fahrgast von einem anfänglichen Zustand in einen folgenden Zustand der Vielzahl von Fahrgastzuständen der Vielzahl von Fahrgästen übergehen zu lassen.

12. Verfahren nach Anspruch 11, wobei das Transportnetz mindestens einen Anschluss zwischen einem Transportmodus und einem anderen Transportmodus des mindestens einen Transportmodus umfasst, wobei der Anschluss durch eine Anschlussstation der Vielzahl von Stationen des Transportmodus des mindestens einen Transportmodus zu einer anderen Anschlussstation der Vielzahl von Stationen des anderen Transportmodus des mindestens einen Transportmodus definiert wird,
und wobei die Vielzahl von Fahrgastzuständen des mindestens einen Fahrgastes einen der Fahrgastzustände umfasst aus:
- wartend an der Station,
- an Bord,
- auf dem Weg zum Anschluss,
- im Einsteigen begriffen,
- im Aussteigen begriffen,
- am Ziel angelangt,
und wobei die mindestens eine Änderungsregel eines Fahrgastzustands des mindestens einen Fahrgastes optional mindestens eine Bestimmungsregel der durch das Fahrgastprofil des mindestens einen Fahrgastes konditionierte Fahrtgeschwindigkeit umfasst.

## Claims

1. A method (100) for regulating a transport network, the transport network being used by a plurality of passengers of the network and the transport network comprising at least one transportation mode, each transportation mode of the at least one transportation mode comprising at least one vehicle and a plurality of stations, a start station of the plurality of stations of the at least one transportation mode being connected by a plurality of itineraries, each itinerary of the plurality of itineraries comprising a list of intermediate stations of the plurality of stations, to a destination station of the plurality of stations, each itinerary further comprising one or more portions adapted to the movement of the at least one vehicle between two stations of the plurality of stations, a timetable of the at least one transportation mode defining a check-in time of the at least one vehicle at the start station, at the destination station, and at each station of the list of intermediate stations of the itinerary, the plurality of passengers of the network comprising, for each station of the plurality of stations of the at least one transportation mode, a number of passengers waiting at the station, the number of passengers waiting at the station being determined from data captured by at least one data collection instrument, a start-destination matrix defining, for a period of time, and for a pair formed by the start station and the destination station, an additional number of passengers who will come into the network via the start station, over the period of time, to join the destination station, a rate being an entry rate, or an exit rate, of passengers from the at least one vehicle during a stop of the at least one vehicle at a station of the plurality of stations,
the method comprising the following steps:
for each transportation mode of the at least one transportation mode,
- determination (101) of a current state of the transportation mode defined for a current time within the period of time;
- simulation (102) of a future state, for a future time, of the transportation mode based on the current state, and of the additional number of passengers who will come into the network over the period of time according to the start-destination matrix;
- assessment (103) of at least one performance indicator based on the future state of the transportation mode;
- determination (104) of at least one regulatory action on the at least one transportation mode as a function of the assessment of the at least one indicator;
- new simulation (105) of a new future state, for the future time, based on the current state, for the current time, and on the additional number of passengers who will come into the network over the period of time according to the start-destination matrix;
- new simulation (106) of the at least one performance indicator of the transportation mode based on the new future state;
- comparison (107) of the result of the new assessment and of the assessment of the at least one performance indicator;
- repetition (108) of the steps of determination (104) of at least one regulatory action, of new simulation (105), of new assessment (106) and of comparison (107) until a result of the comparison (107) indicates an improvement of the at least one performance indicator,
- implementation of the at least one action determined at the last occurrence of the determination step (104) in order to improve the network performance,
the simulation (102) of the future state and the new simulation (105) of the new future state being respectively carried out, for at least one intermediate time between the current time and the future time, by distributing over the plurality of itineraries joining the start station and the destination station, according to a predetermined distribution procedure, the number of passengers waiting at said start station to join said destination station, added to the estimated additional number, for said start station and for a period of time including the at least one intermediate time, based on the start-destination matrix
wherein the current state of the transportation mode is defined by at least one parameter, the at least one parameter comprising one amongst:
- the number of passengers waiting at the stations of the plurality of stations of the transportation mode,
- a position and a load of the at least one vehicle of the transportation mode,
- a distribution by passenger-profile, of the number of passengers waiting at the stations of the plurality of stations of the transportation mode,
and wherein a value is determined by the at least one data collection instrument, for each parameter of the at least one parameter, at the determination step;
- wherein the at least one regulatory action of the transportation mode comprises at least one of the actions amongst:
∘ add a vehicle,
∘ modify an itinerary of a vehicle to go from one station of the plurality of stations to another station of the plurality of stations of the transportation mode,
∘ modify a check-in time of the at least one vehicle at a station of the plurality of stations,
∘ close a station for a while,
∘ set up a replacement bus,
∘ close at least one of the one or more section(s) for a while,
∘ reduce the rate,
∘ add a station, and
∘ delete a stop at a station.

2. The determination method according to claim 1, wherein the predetermined distribution procedure is carried out based on a passenger-profile associated to each passenger of the plurality of passengers waiting at said start station, and as a function of an intermediate state of the network defined at the intermediate time.

3. The determination method according to claim 2, wherein a passenger-itinerary is associated to each passenger of the plurality of passengers waiting at said start station, the passenger-itinerary being determined as a function of the passenger-profile.

4. The determination method according to any of claims 1 to 3, wherein the predetermined distribution procedure is a multimodal dynamic assignment procedure.

5. The determination method according to any of the preceding claims, wherein the at least one data collection instrument is a sensor, or a statistical data learning application, or a remote tickets purchase ticketing application.

6. The determination method according to claim 5, wherein the passenger-itinerary comprises a list of stations, each station of said list being a station of the plurality of stations of the at least one transportation mode, and each station of said list being determined as a function of the check-in time of the at least one vehicle of each transportation mode of the at least one transportation mode at the stations of the plurality of stations of each transportation mode of the at least one transportation mode, and so as to optimize the check-in time at the passenger-destination, and as a function of the passenger-profile.

7. The determination method according to any of the preceding claims, wherein the at least one transportation mode comprises at least one of the transportation modes amongst the transportation modes: by road, by rail, by air, by inland waterways, by sea.

8. The determination method according to any of the preceding claims, wherein the at least one performance indicator of the transportation network comprises at least one of the indicators: punctuality, regularity, occupancy rate, waiting time, trip duration.

9. The determination method according to any of the preceding claims, wherein the simulation of the future state and the new simulation of the new future state is carried out based on a vehicle-itinerary and on a vehicle-behavior model of the at least one vehicle,
and wherein the vehicle-behavior model of the at least one vehicle is defined by a plurality of vehicle-states of the at least one vehicle and by at least one vehicle-state change rule to make the at least one vehicle switch from an initial vehicle-state into a next vehicle-state of the plurality of vehicle-states of the at least one vehicle,
and wherein the vehicle-itinerary of the at least one vehicle comprises a subset of stations of the plurality of stations of the transportation mode of the at least one transportation mode, the subset of stations comprising a departure station, intermediate stations, a terminus station and, optionally, at least one intermediate itinerary to go from one station of the subset of stations to the station.

10. The determination method according to claim 9,
wherein the plurality of vehicle-states of the at least one vehicle comprises one of the vehicle-states amongst:
- vehicle at stop by a signal (12),
- vehicle moving (11),
- vehicle at stop by a station (15),
- vehicle being loaded (14),
- vehicle being closed (13),
- vehicle arrived at the terminus (16),
and wherein the at least one vehicle-state change rule of the at least one vehicle comprises at least one safety rule and at least one rule for determining a displacement speed.

11. The determination method according to any of the preceding claims, wherein the simulation of the future state and the new simulation of the new future state is carried out based on a passenger-behavior model of the plurality of passengers of the transportation mode,
the passenger-behavior model of the plurality of passengers being defined by a plurality of passenger-states of the at least one passenger and by at least one passenger-state change rule for making the at least one passenger switch from an initial state into a next state of the plurality of passenger-states of the plurality of passengers.

12. The determination method according to claim 11, wherein the transport network comprises at least one connection between a transportation mode and another transportation mode of the at least one transportation mode, the connection being defined by a connection station of the plurality of stations of the transportation mode of the at least one transportation mode, towards another connection station of the plurality of stations of the other transportation mode of the at least one transportation mode,
and wherein the plurality of passenger-states of the at least one passenger comprises one of the passenger-states amongst:
- waiting at station,
- onboard,
- walking in transit,
- boarding,
- descending,
- arrived at destination,
and wherein, optionally, the at least one passenger-state change rule of the at least one passenger comprises at least one walking speed determination rule conditioned by the passenger-profile of the at least one passenger.
